# EUROPEAN PATENT SPECIFICATION

(11) **EP 2 543 869 B1**
(45) Date of publication and mention of the grant of the patent: **06.09.2017**
(21) Application number: 11750346.6
(22) Date of filing: 24.02.2011
(51) Int. Cl.: F02M 25/022, F02B 47/02, F02D 19/12, F02M 25/00, F02M 55/00, F02D 19/06

(54) **ENGINE SYSTEM WITH WATER-EMULSION FUEL DRAIN RECYCLING DEVICE**
MOTORENSYSTEM MIT VORRICHTUNG ZUR FÜHRUNG IM KREISLAUF EINES WASSEREMULSIONS-BRENNSTOFF-ABFLUSSES
SYSTÈME DE MOTEUR COMPORTANT UN DISPOSITIF DE RÉCIRCULATION POUR LA PURGE DE CARBURANT EN ÉMULSION À L'EAU

(30) Priority: 01.03.2010 JP 2010044427
(43) Date of publication of application: 09.01.2013
(73) Proprietor: Kawasaki Jukogyo Kabushiki Kaisha, Kobe-shi, Hyogo 650-8670 (JP)
(72) Inventor: TOYODA, Takeshi, Kobe-shi, Hyogo 650-8670 (JP); KAKAMU, Koki, Kobe-shi, Hyogo 650-8670 (JP)
(74) Representative: Leinweber & Zimmermann
(86) International application number: PCT/JP2011/001061
(87) International publication number: WO 2011/108233

(56) References cited:
- EP-A1- 0 049 959
- DE-C1- 19 609 800
- JP-A- 6 159 149
- JP-A- 8 200 163
- JP-A- 8 303 305
- JP-A- 2001 012 309
- JP-A- 2002 535 558
- JP-A- 2003 254 107
- JP-A- 2009 079 071

## Description

### Technical Field

The present invention relates to an engine system with a water-emulsion fuel drain recycling device, the engine system being capable of recycling a water-emulsion fuel drain discharged from a fuel injection pump apparatus configured to supply a water-emulsion fuel to a stationary or movable diesel engine main body, especially a marine diesel engine main body.

### Background Art

As one technology for reducing NOₓ in an exhaust gas of an internal combustion engine, there is a water-emulsion fuel obtained by mixing and stirring fuel oil and water. It is generally confirmed that the NOₓ in the exhaust gas can be reduced by using the water-emulsion fuel as the fuel of the internal combustion engine. The water-emulsion fuel is also applicable to marine diesel engines.

In the marine diesel engines, Bunker C can be used as the fuel oil. In the case of using the water-emulsion fuel, Bunker C can be used as the fuel oil that is a base of the water-emulsion fuel.

Generally, in a marine diesel engine configured to use as a fuel oil, for example, Bunker C which is not mixed with water, a Bunker C drain discharged from a fuel injection pump apparatus of the marine diesel engine is temporarily stored in a fuel drain storage tank. When the amount of Bunker C drain stored in the fuel drain storage tank reaches a certain amount, the Bunker C drain is returned to a fuel supply line to be recycled.

The Bunker C drain denotes Bunker C supplied to, for example, the diesel engine as the fuel oil and supplied to a gap (sliding surface) between an outer peripheral surface of a plunger of the fuel injection pump apparatus and an inner peripheral surface of a barrel of the fuel injection pump apparatus to be used as lubricating oil and then discharged.

However, if the water-emulsion fuel obtained by mixing Bunker C (fuel oil) and water is used in the marine diesel engine and a water-emulsion fuel drain discharged from the fuel injection pump apparatus is stored in the fuel drain storage tank as described above, in some cases, the water-emulsion fuel drain is left in the fuel drain storage tank for a long period of time and the property thereof deteriorates due to the separation between the water and Bunker C. As a result, the problem is that the water-emulsion fuel drain discharged from the fuel injection pump apparatus cannot be recycled.

One example of a conventional water-emulsion fuel supply system is a system configured such that a fuel injection pump apparatus and a fuel injection valve are provided on a water-emulsion fuel circulation line and the water-emulsion fuel injected by the fuel injection pump apparatus is injected to a diesel engine main body through the fuel injection valve (see PTL 1, for example). Each of the fuel injection pump apparatus and the fuel injection valve includes a fuel inlet and a fuel outlet which are connected to the circulation line.

One example of a conventional fuel supply apparatus of a diesel engine is an apparatus configured such that a fuel injection pump apparatus is provided on a water-emulsion fuel circulation line and the water-emulsion fuel injected by the fuel injection pump apparatus is injected to a diesel engine main body through a fuel injection valve connected to the fuel injection pump apparatus (see PTL 2, for example). The fuel injection pump apparatus includes a fuel inlet and a fuel outlet which are connected to the circulation line.

### Citation List

### Patent Literature

PTL 1: Japanese Laid-Open Patent Application Publication No. 2002-4949
PTL 2: Japanese Laid-Open Patent Application Publication No. 8-246961

### Summary of Invention

### Technical Problem

The water-emulsion fuel supply system described in PTL 1 is configured such that out of the water-emulsion fuel having been supplied to the fuel injection valve, the remaining water-emulsion fuel which has not been injected from the fuel injection valve to the diesel engine main body is returned to the circulation line. However, PTL 1 does not describe how to handle the water-emulsion fuel drain in a case where the water-emulsion fuel drain is discharged from the fuel injection pump apparatus.

Similarly, the fuel supply apparatus of the diesel engine described in PTL 2 is configured such that out of the water-emulsion fuel having been supplied to the fuel injection pump apparatus, the remaining water-emulsion fuel which has not been injected from the fuel injection pump apparatus to the fuel injection valve is returned to the circulation line. However, PTL 2 does not describe how to handle the water-emulsion fuel drain discharged from the fuel injection pump apparatus.

The present invention was made to solve the above problems, and an object of the present invention is to provide an engine system with a water-emulsion fuel drain recycling device, the engine system being configured such that a water-emulsion fuel drain discharged through a drain port of a fuel injection pump apparatus can be returned to a circulation line within a comparatively short storage time to be recycled as a water-emulsion fuel.

DE 196 09 800 C1 discloses an engine with a circulation line. Return fuel is either guided to a buffer tank or kept in circulation. The emulsion from the buffer tank is not added to a circulating fuel in a circulation line including the drain port but forms part of the circulation circuit.

### Solution to Problem

An engine system with a water-emulsion fuel drain recycling device according to the present invention includes: a circulation line in which a water-emulsion fuel obtained by mixing fuel oil and water with a mixer circulates; a fuel injection pump apparatus connected to the circulation line and including a fuel inlet through which the water-emulsion fuel is supplied from the circulation line and a fuel outlet through which the water-emulsion fuel is returned to the circulation line; an engine main body to which the water-emulsion fuel is supplied by the fuel injection pump apparatus; a water-emulsion fuel drain storage tank configured to store a water-emulsion fuel drain discharged through a drain port of the fuel injection pump apparatus; a return line through which the water-emulsion fuel drain stored in the water-emulsion fuel drain storage tank is returned to the circulation line; and a drain injection pump connected to the return line.

In the engine system with the water-emulsion fuel drain recycling device according to the present invention, the water-emulsion fuel obtained by mixing the fuel oil and the water with the mixer can be caused to circulate in the circulation line. The water-emulsion fuel circulating in the circulation line flows into the fuel inlet of the fuel injection pump apparatus to be supplied to the engine main body by the fuel injection pump apparatus. Thus, the engine main body can be driven. It should be noted that out of the water-emulsion fuel flowed into the fuel inlet of the fuel injection pump apparatus, the remaining water-emulsion fuel which has not been supplied to the engine main body flows out through the fuel outlet of the fuel injection pump apparatus to be returned to the circulation line.

The water-emulsion fuel drain discharged through the drain port of the fuel injection pump apparatus can be stored in the water-emulsion fuel drain storage tank. The water-emulsion fuel drain stored in the water-emulsion fuel drain storage tank can be caused to flow through the return line by the drain injection pump to be returned to the circulation line.

The reason why the water-emulsion fuel drain is not directly returned to the circulation line without being stored in the water-emulsion fuel drain storage tank is because the water-emulsion fuel drain needs to be stored in the water-emulsion fuel drain storage tank and then pumped since the drain is open to the atmosphere whereas the circulation line is maintained at high pressure.

Thus, the water-emulsion fuel drain discharged through the drain port of the fuel injection pump apparatus can be returned to the circulation line within a comparatively short storage time to be recycled as the water-emulsion fuel.

In the engine system with the water-emulsion fuel drain recycling device according to the present invention, the return line may be configured such that the water-emulsion fuel drain is returned to the mixer connected to the circulation line or to an upstream side of the mixer.

With this, the water-emulsion fuel drain discharged through the drain port of the fuel injection pump apparatus can be returned to the mixer connected to the circulation line or to the upstream side of the mixer. Therefore, if the separation between the water and fuel oil of the water-emulsion fuel drain has occurred but the degree of separation is a predetermined level or less, the quality of the water-emulsion fuel drain as the fuel can be improved by stirring the water-emulsion fuel drain with the mixer. With this, an appropriate mixed state of the water-emulsion fuel drain in which the separation has occurred can be realized, and this water-emulsion fuel drain can be supplied to the engine main body.

In the engine system with the water-emulsion fuel drain recycling device according to the present invention, a desired fuel that is the water-emulsion fuel or a normal fuel which is not mixed with the water may circulate in the circulation line, and the fuel injection pump apparatus may be configured to supply to the engine main body the water-emulsion fuel circulating in the circulation line or the normal fuel which is not mixed with the water and circulates in the circulation line, and the engine system may further include: a normal fuel drain storage tank configured to store a normal fuel drain discharged through the drain port of the fuel injection pump apparatus; and a switching portion configured to switch a destination to which the normal fuel drain or water-emulsion fuel drain discharged through the drain port of the fuel injection pump apparatus is transferred, to a corresponding storage tank that is the normal fuel drain storage tank or the water-emulsion fuel drain storage tank.

With this, in a case where the water-emulsion fuel or normal fuel circulating in the circulation line is being supplied to the engine main body by the fuel injection pump apparatus, the switching portion can be switched such that the water-emulsion fuel drain or normal fuel drain discharged through the drain port of the fuel injection pump apparatus can be transferred to a corresponding drain storage tank that is the water-emulsion fuel drain storage tank or the normal fuel drain storage tank. With this, the change in the property of the water-emulsion fuel drain due to the long-term storage can be prevented, and different types of fuels can be prevented from being mixed.

The engine system with the water-emulsion fuel drain recycling device according to the present invention may further include a drain sensor configured to detect the amount of water-emulsion fuel drain stored in the water-emulsion fuel drain storage tank and drive the drain injection pump when the amount of water-emulsion fuel drain reaches a predetermined level or larger.

With this, the drain sensor can detect the amount of water-emulsion fuel drain stored in the water-emulsion fuel drain storage tank and drive the drain injection pump when the amount of water-emulsion fuel drain reaches a predetermined level or larger. Therefore, the amount of water-emulsion fuel drain stored in the water-emulsion fuel drain storage tank can be controlled, and the water-emulsion fuel drain can be surely returned to the circulation line within a comparatively short storage time to be recycled as the water-emulsion fuel.

In the engine system with the water-emulsion fuel drain recycling device according to the present invention, the engine main body may be a diesel engine main body.

With this, the water-emulsion fuel drain recycling device can be applied to a diesel engine.

### Advantageous Effects of Invention

The engine system with the water-emulsion fuel drain recycling device according to the present invention is configured such that the water-emulsion fuel drain discharged through the drain port of the fuel injection pump apparatus can be returned to the circulation line within a comparatively short storage time. Therefore, before the separation of the water-emulsion fuel drain into the water and the fuel oil proceeds, and therefore, the water-emulsion fuel drain becomes unusable, the water-emulsion fuel drain can be recycled as the water-emulsion fuel, which is economical. On this account, the engine system can contribute to the effective utilization of natural resources that are fuels.

### Brief Description of Drawings

[Fig. 1] Fig. 1 is a circuit diagram showing an engine system with a water-emulsion fuel drain recycling device according to one embodiment of the present invention.
[Fig. 2] Fig. 2 is a partially enlarged longitudinal sectional view showing a fuel injection pump apparatus included in the engine system according to the embodiment.

### Description of Embodiments

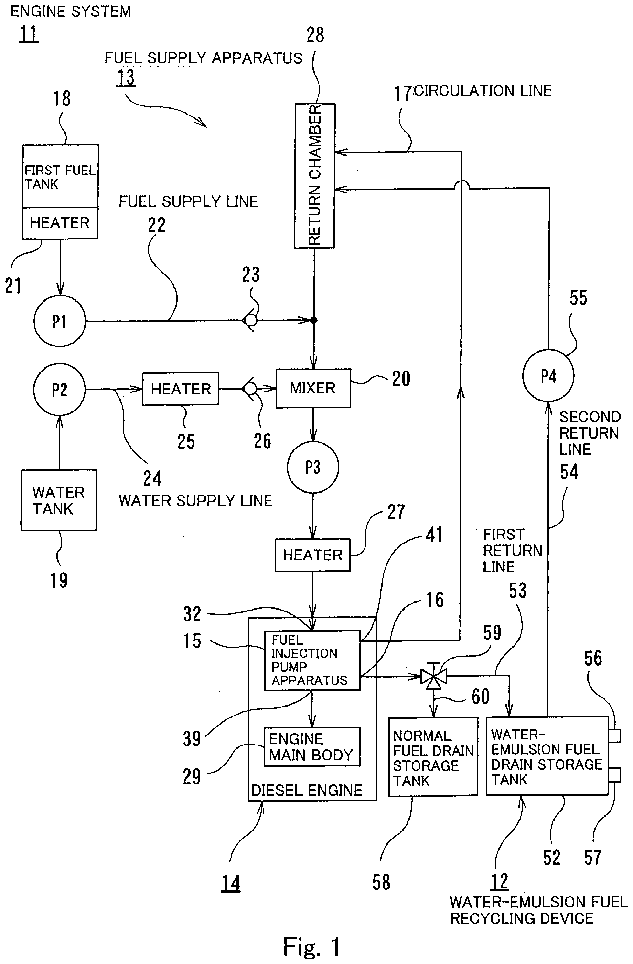

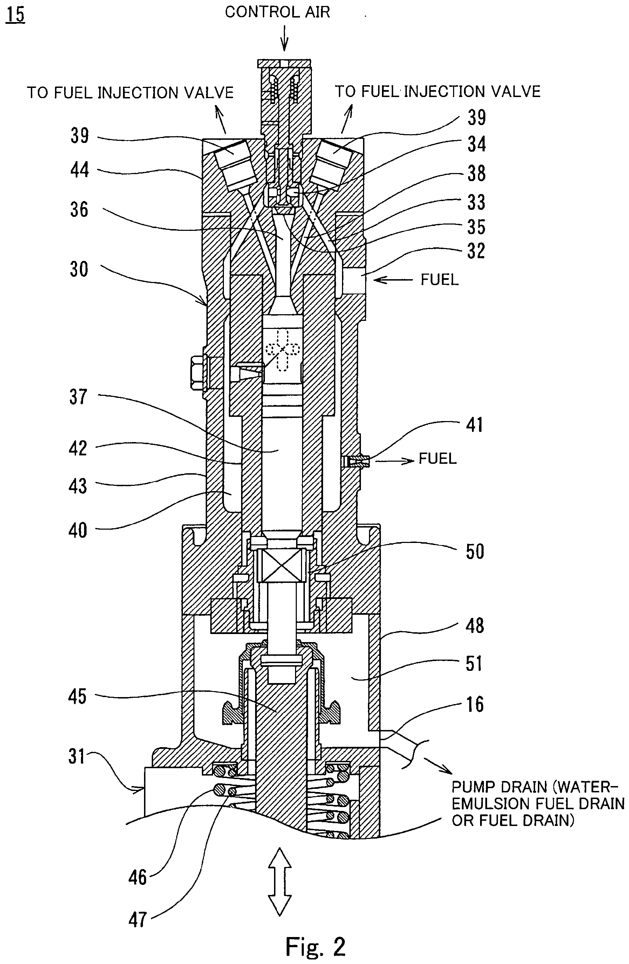

Hereinafter, one embodiment of an engine system with a water-emulsion fuel drain recycling device (hereinafter may be simply referred to as "engine system") according to the present invention will be explained in reference to Figs. 1 and 2. As shown in Fig. 1, an engine system 11 includes a fuel supply apparatus 13, a diesel engine 14 to which a fuel is supplied from the fuel supply apparatus 13, and a water-emulsion fuel drain recycling device 12.

The water-emulsion fuel drain recycling device 12 can return a water-emulsion fuel drain (pump drain) to a circulation line 17 included in the fuel supply apparatus 13, the water-emulsion fuel drain being discharged through a drain port 16 of a fuel injection pump apparatus 15 included in the diesel engine 14.

As shown in Fig. 1, the fuel supply apparatus 13 is configured such that: a water-emulsion fuel obtained by mixing first fuel oil stored in a first fuel tank 18 and water stored in a water tank 19 with a mixer 20 can be caused to circulate in the circulation line 17; and the water-emulsion fuel circulating in the circulation line 17 can be supplied to the diesel engine 14 connected to the circulation line 17.

The fuel supply apparatus 13 can supply only the first fuel oil stored in the first fuel tank 18 to the mixer 20 without supplying the water stored in the water tank 19 to the mixer 20 and cause the first fuel oil to circulate in the circulation line 17 to supply the first fuel oil to the diesel engine 14.

The first fuel tank 18 can store the first fuel oil and is provided with a heater 21. The first fuel oil in the first fuel tank 18 can be heated to, for example, about 80°C by the heater 21. The first fuel oil is, for example, Bunker C.

A fuel supply pump P1 can supply to the mixer 20 the first fuel oil stored in the first fuel tank 18 and apply predetermined pressure to a fuel, such as the water-emulsion fuel, in the circulation line 17. The fuel supply pump P1 is provided on a portion of a fuel supply line (pipe) 22 connecting an outlet of the first fuel tank 18 and a first inlet of the mixer 20. The fuel supply pump P1 is configured to be driven by an electric motor, not shown.

As shown in Fig. 1, a check valve 23 is provided on a portion of the fuel supply line 22 so as to be located downstream of the fuel supply pump P1. The check valve 23 prevents the first fuel oil and the fuel, such as the water-emulsion fuel, in the circulation line 17 from flowing backward from the mixer 20 side (the circulation line 17 side) to the first fuel tank 18 side.

The water tank 19 shown in Fig. 1 can store the water, and a water supply pump P2 is connected to an outlet of the water tank 19.

The water supply pump P2 can supply to the mixer 20 the water stored in the water tank 19 and is provided on a portion of a water supply line (pipe) 24 connecting the outlet of the water tank 19 and a second inlet of the mixer 20. The water supply pump P2 is configured to be driven by an electric motor, not shown.

As shown in Fig. 1, a heater 25 and a check valve 26 are provided on portions of the water supply line 24 in this order so as to be located downstream of the water supply pump P2. The heater 25 can heat the water flowing through the water supply line 24 to, for example, about 90°C. The check valve 26 prevents the water and the fuel, such as the water-emulsion fuel, in the circulation line 17 from flowing backward from the mixer 20 side (the circulation line 17 side) to the water tank 19 side.

Next, the circulation line 17 shown in Fig. 1 will be explained. The circulation line 17 is formed by a pipe connected in an annular shape and is configured such that the fuel, such as the water-emulsion fuel, flows through the circulation line 17 in a counterclockwise direction. By the circulation line 17, the fuel, such as the water-emulsion fuel, circulating in the circulation line 17 can be supplied to the diesel engine 14 connected to the circulation line 17. The mixer 20, a fuel circulation pump P3, a heater 27, the diesel engine 14, and a return chamber 28 are provided on the circulation line 17.

The reason why the circulation line 17 is provided as above is because the fuel, the amount of which is larger than the fuel consumption, needs to be supplied to the fuel line at all times for the purpose of preventing pulsation of the fuel line due to the change in the fuel consumption by, for example, the change in the output of the diesel engine 14.

The mixer 20 can mix and stir the first fuel oil supplied by the fuel supply pump P1 and the water supplied by the water supply pump P2 to produce the water-emulsion fuel. The water-emulsion fuel produced by the mixer 20 is supplied to the fuel circulation pump P3 provided downstream of the mixer 20.

The fuel circulation pump P3 can increase the pressure of the fuel, such as the water-emulsion fuel, in the circulation line 17 to predetermined pressure to cause the fuel to circulate. The fuel circulation pump P3 is configured to be driven by an electric motor, not shown.

The heater 27 can heat the fuel, such as the water-emulsion fuel, discharged from the fuel circulation pump P3 to, for example, about 150°C.

The return chamber 28 is a chamber for returning the fuel, such as the water-emulsion fuel, unconsumed in the diesel engine 14 to the mixer 20 through the circulation line 17.

Here, the discharge pressure of each of the fuel supply pump P1 and the water supply pump P2 shown in Fig. 1 is, for example, about 0.6 MPa, and the discharge pressure of the fuel circulation pump P3 is, for example, about 1.2 MPa. The temperature of the first fuel oil heated by the heater 21 is, for example, about 80°C, and the temperature of the water heated by the heater 25 is, for example, about 90°C. The temperature of the fuel, such as the water-emulsion fuel, heated by the heater 27 is, for example, about 150°C.

The diesel engine (engine) 14 shown in Fig. 1 is a stationary or movable diesel engine. In the present embodiment, the diesel engine 14 is a marine diesel engine.

The diesel engine 14 is connected to the circulation line 17 and is configured such that the fuel, such as the water-emulsion fuel, is supplied thereto. The diesel engine 14 is provided with the fuel injection pump apparatus 15. The fuel injection pump apparatus 15 can increase the pressure of the fuel, such as the water-emulsion fuel, supplied through the circulation line 17 up to predetermined injection pressure to inject the fuel from a fuel injection valve, not shown, of the diesel engine 14 to an engine combustion chamber formed in an engine main body (diesel engine main body) 29.

Fig. 2 is a partially enlarged longitudinal sectional view showing the fuel injection pump apparatus 15. The fuel injection pump apparatus 15 includes a pump main body 30 and a pump driving device 31.

Various fuels, such as the water-emulsion fuel and Bunker C which is not mixed with the water, are supplied to the pump main body 30 shown in Fig. 2 through a fuel inlet 32 connected to the circulation line 17. The fuel supplied through the fuel inlet 32 flows through a passage 33 to a valve chest 34 and is then supplied to a supply chamber 36 by open and close operations of a control valve 35. The pressure of the fuel supplied to the supply chamber 36 is increased up to the predetermined injection pressure by upward and downward movements of a plunger 37, and the fuel then flows through passages 38 and discharge ports 39 to be injected from the fuel injection valve, not shown, to the engine combustion chamber of the engine main body 29.

Out of the fuel, such as the water-emulsion fuel, supplied through the fuel inlet 32 to the pump main body 30, the remaining fuel, such as the water-emulsion fuel, which has not been supplied to the engine main body 29 flows through a discharge chamber 40 and fuel outlet 41 of the pump main body 30 to be returned to the circulation line 17 shown in Fig. 1.

The plunger 37 shown in Fig. 2 has a long, thin, substantially columnar shape and is attached in a substantially cylindrical barrel 42 so as to be movable in an axial direction of an inner hole of the barrel 42. The barrel 42 is housed in a substantially cylindrical pump case 43. The fuel inlet 32 and the fuel outlet 41 are formed on the pump case 43. A head 44 is provided on an upper end portion of the pump case 43, and a plurality of discharge ports 39 are formed on the head 44.

Next, the pump driving device 31 configured to drive the pump main body 30 shown in Fig. 2 will be explained. The pump driving device 31 is provided at a lower portion of the pump main body 30 shown in Fig. 2. The pump driving device 31 includes a push rod 45 capable of causing the plunger 37 provided at the pump main body 30 to move upward and downward with predetermined timings. The push rod 45 is driven by a driving portion, such as a cam, not shown, and springs 46 and 47 shown in Fig. 2 to move upward and downward.

Further, as shown in Fig. 2, the drain port 16 is formed on a coupling case 48 configured to couple the pump main body 30 and the pump driving device 31. The drain port 16 is a port for discharging the fuel, such as the water-emulsion fuel, supplied to a gap between an outer peripheral surface of the plunger 37 of the pump main body 30 and an inner peripheral surface of the barrel 42.

To be specific, the fuel, such as the water-emulsion fuel, flowing through the fuel inlet 32 into the discharge chamber 40 is supplied to the gap between the outer peripheral surface of the plunger 37 and the inner peripheral surface of the barrel 42, and the fuel, such as the water-emulsion fuel, supplied to the gap serves as lubricating oil. The fuel supplied to the gap flows through a passage 50 into a drain chamber 51 to be discharged through the drain port 16. Out of the fuel discharged through the drain port 16, the water-emulsion fuel is returned to the circulation line 17 by the below-described water-emulsion fuel drain recycling device 12 shown in Fig. 1.

As shown in Fig. 1, the water-emulsion fuel drain recycling device 12 includes a water-emulsion fuel drain storage tank 52. The water-emulsion fuel drain storage tank 52 stores the water-emulsion fuel drain discharged through the drain port 16 of the fuel injection pump apparatus 15 shown in Fig. 2. The drain port 16 of the fuel injection pump apparatus 15 is connected to the water-emulsion fuel drain storage tank 52 through a first return line (pipe) 53.

The water-emulsion fuel drain storage tank 52 is connected to the return chamber 28 of the circulation line 17 through a second return line (pipe) 54. A drain injection pump 55 is provided on a portion of the second return line 54. The drain injection pump 55 is configured to be driven by an electric motor, not shown.

By driving the drain injection pump 55, the water-emulsion fuel drain stored in the water-emulsion fuel drain storage tank 52 can be returned to the return chamber 28 of the circulation line 17.

As shown in Fig. 1, a first drain sensor 56 and a second drain sensor 57 are provided on the water-emulsion fuel drain storage tank 52. The first drain sensor 56 can detect the amount (liquid surface) of water-emulsion fuel drain stored in the water-emulsion fuel drain storage tank 52 and drive the drain injection pump 55 when the liquid surface of the water-emulsion fuel drain reaches a predetermined level or higher. The second drain sensor 57 can detect the amount (liquid surface) of water-emulsion fuel drain stored in the water-emulsion fuel drain storage tank 52 and stop driving the drain injection pump 55 when the liquid surface of the water-emulsion fuel drain reaches a predetermined level or lower.

Each of the first and second drain sensors 56 and 57 is constituted by, for example, a float switch but may be constituted by, for example, a capacitance sensor. In the present embodiment, the driving of the drain injection pump 55 is controlled in such a manner that each of the first and second drain sensors 56 and 57 detects the liquid surface of the water-emulsion fuel drain stored in the water-emulsion fuel drain storage tank 52. However, instead of this, the driving of the drain injection pump 55 may be controlled in such a manner that, for example, the weight of the water-emulsion fuel drain stored in the water-emulsion fuel drain storage tank 52 is measured by a weight sensor.

The water-emulsion fuel drain recycling device 12 shown in Fig. 1 includes a normal fuel drain storage tank 58 in addition to the water-emulsion fuel drain storage tank 52. The normal fuel drain storage tank 58 stores a normal fuel drain discharged through the drain port 16 of the fuel injection pump apparatus 15. The normal fuel drain denotes a fuel, such as pure Bunker C, which is not mixed with water.

As shown in Fig. 1, a switching portion (three-way switching valve) 59 is provided on a portion of the first return line 53. The normal fuel drain storage tank 58 is connected to the switching portion 59 through a pipe 60. The switching portion 59 can switch a destination to which the normal fuel drain or water-emulsion fuel drain discharged through the drain port 16 of the fuel injection pump apparatus 15 is transferred, to a corresponding storage tank that is the normal fuel drain storage tank 58 or the water-emulsion fuel drain storage tank 52.

Next, the actions of the engine system 11 with the water-emulsion fuel drain recycling device will be explained in reference to Figs. 1 and 2. According to the engine system 11 shown in Fig. 1, the water-emulsion fuel obtained by mixing the fuel oil (for example, Bunker C) in the first fuel tank 18 and the water in the water tank 19 with the mixer 20 can be caused to circulate in the circulation line 17. The water-emulsion fuel circulating in the circulation line 17 flows into the fuel inlet 32 of the fuel injection pump apparatus 15 to be supplied to the engine main body 29 by the fuel injection pump apparatus 15. Thus, the engine main body 29 can be driven.

Out of the water-emulsion fuel flowed into the fuel inlet 32 of the fuel injection pump apparatus 15, the remaining water-emulsion fuel which has not been supplied to the engine main body 29 flows out through the fuel outlet 41 of the fuel injection pump apparatus 15 to be returned to the circulation line 17.

The water-emulsion fuel drain discharged through the drain port 16 of the fuel injection pump apparatus 15 can be stored in the water-emulsion fuel drain storage tank 52. The water-emulsion fuel drain stored in the water-emulsion fuel drain storage tank 52 can be caused to flow through the second return line 54 by the drain injection pump 55 to be returned to the circulation line 17.

The reason why the water-emulsion fuel drain is not directly returned to the circulation line 17 without being stored in the water-emulsion fuel drain storage tank 52 is because the water-emulsion fuel drain needs to be stored in the water-emulsion fuel drain storage tank 52 and then pumped since the drain is open to the atmosphere whereas the circulation line 17 is maintained at high pressure.

As above, according to the engine system 11 with the water-emulsion fuel drain recycling device of the present invention, the water-emulsion fuel drain discharged through the drain port 16 of the fuel injection pump apparatus 15 can be returned to the circulation line 17 within a comparatively short storage time to be recycled as the water-emulsion fuel.

Therefore, before the separation of the water-emulsion fuel drain into the water and Bunker C proceeds, and therefore, the water-emulsion fuel drain becomes unusable, the water-emulsion fuel drain can be recycled as the water-emulsion fuel, which is economical. On this account, the engine system 11 can contribute to the effective utilization of natural resources that are fuels.

Each of the first and second drain sensors 56 and 57 shown in Fig. 1 can detect the liquid surface of the water-emulsion fuel drain stored in the water-emulsion fuel drain storage tank 52 and can drive the drain injection pump 55 when the amount (liquid surface) of water-emulsion fuel drain reaches a predetermined level or larger. Therefore, the amount of water-emulsion fuel drain stored in the water-emulsion fuel drain storage tank 52 can be controlled, and the water-emulsion fuel drain can be surely returned to the circulation line 17 within a comparatively short storage time to be recycled as the water-emulsion fuel.

As shown in Fig. 1, the water-emulsion fuel drain discharged through the drain port 16 of the fuel injection pump apparatus 15 can be returned through the first and second return lines 53 and 54 to the return chamber 28 provided upstream of the mixer 20 connected to the circulation line 17. Therefore, if the separation between the water and Bunker C (fuel oil) of the water-emulsion fuel drain has occurred but the degree of the separation is a predetermined level or less, the quality of the water-emulsion fuel drain as the fuel can be improved by stirring the water-emulsion fuel drain with the mixer 20. With this, an appropriate mixed state of the water-emulsion fuel drain in which the separation has occurred can be realized, and this water-emulsion fuel drain can be supplied to the engine main body 29.

In the present embodiment, the second return line 54 is connected to the return chamber 28, and the water-emulsion fuel drain is returned to the return chamber 28. Instead of this, the second return line 54 may be connected to the mixer 20, and the water-emulsion fuel drain may be returned to the mixer 20.

Further, as a method of using the engine system 11 shown in Fig. 1, as described above, explained is an example in which: the diesel engine 14 is driven in such a manner that the water-emulsion fuel obtained by mixing the fuel oil (for example, Bunker C) in the first fuel tank 18 and the water in the water tank 19 with the mixer 20 is caused to circulate in the circulation line 17; at this time, the water-emulsion fuel drain discharged through the drain port 16 of the fuel injection pump apparatus 15 is stored in the water-emulsion fuel drain storage tank 52; and the water-emulsion fuel drain stored in the water-emulsion fuel drain storage tank 52 is returned to the circulation line 17 by the drain injection pump 55. However, the other method may be used.

Another example is that: the diesel engine 14 is driven in such a manner that the fuel oil (normal fuel, such as Bunker C) in the first fuel tank 18 is caused to circulate in the circulation line 17 without supplying to the mixer 20 the water in the water tank 19; at this time, the normal fuel, such as Bunker C, discharged through the drain port 16 of the fuel injection pump apparatus 15 is stored in the normal fuel drain storage tank 58; and the normal fuel drain stored in the normal fuel drain storage tank 58 is returned to the first fuel tank 18.

It should be noted that out of the normal fuel flowed into the fuel inlet 32 of the fuel injection pump apparatus 15, the remaining normal fuel which has not been supplied to the engine main body 29 flows out through the fuel outlet 41 of the fuel injection pump apparatus 15 to be returned to the circulation line 17.

As above, the water-emulsion fuel drain or the normal fuel drain is discharged as the pump drain through the drain port 16 of the fuel injection pump apparatus 15. Therefore, the switching portion 59 shown in Fig. 1 can be switched such that the pump drain (the water-emulsion fuel drain or the normal fuel drain) discharged through the drain port 16 can be transferred to a corresponding drain storage tank that is the water-emulsion fuel drain storage tank 52 or the normal fuel drain storage tank 58. With this, the change in the property of the water-emulsion fuel drain due to the long-term storage can be prevented, and different types of fuels can be prevented from being mixed.

The water-emulsion fuel drain recycling device 12 shown in Fig. 1 is used in the marine diesel engine system 11. As above, by using the water-emulsion fuel drain recycling device 12 in the marine diesel engine system 11, the present embodiment can contribute to the spread of the marine diesel engine system 11 using the water-emulsion fuel and therefore contribute to the effective utilization of the natural resources.

In the above embodiment, as shown in Fig. 1, the water-emulsion fuel obtained by mixing the fuel oil (for example, Bunker C) in the first fuel tank 18 and the water in the water tank 19 with the mixer 20 is caused to circulate in the circulation line 17. However, in addition to this, a Bunker A-containing water-emulsion fuel obtained by mixing the fuel oil (such as Bunker A) in the first fuel tank 18, the water in the water tank 19, and an additive (such as a surfactant) in an additive tank, not shown, with the mixer 20 may be caused to circulate in the circulation line 17.

In such a case, a Bunker A water-emulsion fuel drain tank configured to store a Bunker A-containing water-emulsion fuel drain discharged through the drain port 16 of the fuel injection pump apparatus 15 is additionally provided, and the Bunker A-containing water-emulsion fuel drain stored in this drain tank is returned to the return chamber 28 by an additional drain injection pump.

Similarly, in the case of using Bunker A as the normal fuel in addition to Bunker C, a Bunker A drain tank may be provided in addition to the normal fuel drain tank 58 shown in Fig. 1, and the Bunker A drain may be stored in the Bunker A drain tank.

When the amount of normal fuel, such as Bunker C, stored in the normal fuel drain tank 58 reaches a predetermined amount, the normal fuel is returned to the first fuel tank 18 to be used.

In the above embodiment, the present invention is applied to the diesel engine but can be applied to the other internal combustion engines.

### Industrial Applicability

As above, the engine system with the water-emulsion fuel drain recycling device according to the present invention has an excellent effect in which the water-emulsion fuel drain discharged through the drain port of the fuel injection pump apparatus can be returned to the circulation line within a comparatively short storage time to be recycled as the water-emulsion fuel. Thus, the present invention is suitably applied to such an engine system with a water-emulsion fuel drain recycling device.

### Reference Signs List

11 engine system
12 water-emulsion fuel drain recycling device
13 fuel supply apparatus
14 diesel engine
15 fuel injection pump apparatus
16 drain port
17 circulation line
18 first fuel tank
19 water tank
20 mixer
21, 25, 27 heater
22 fuel supply line
23,26 check valve
24 water supply line
28 return chamber
29 engine main body
30 pump main body
31 pump driving device
32 fuel inlet
33, 38, 50 passage
34 valve chest
35 control valve
36 supply chamber
37 plunger
39 discharge port
40 discharge chamber
41 fuel outlet
42 barrel
43 pump case
44 head
45 push rod
46,47 spring
48 coupling case
51 drain chamber
52 water-emulsion fuel drain storage tank
53 first return line
54 second return line
55 drain injection pump
56 first drain sensor
57 second drain sensor
58 normal fuel drain storage tank
59 switching portion
60 pipe

## Claims

1. An engine system (11) with a water-emulsion fuel drain recycling device (12), comprising:
a circulation line (17) in which a water-emulsion fuel obtained by mixing fuel oil and water with a mixer (20) circulates;
a fuel injection pump apparatus (15) connected to the circulation line (17) and including a fuel inlet (32) through which the water-emulsion fuel is supplied from the circulation line (17), a fuel outlet (41) through which the water-emulsion fuel is returned to the circulation line (17), a discharge port (39) through which the water-emulsion fuel supplied through the fuel inlet (31) is injected, and a drain port (16) through which a water-emulsion fuel drain that has served as lubricating oil is discharged;
an engine main body (29) to which the water-emulsion fuel is supplied through the discharge port (39) of the fuel injection pump apparatus (15);
a water-emulsion fuel drain storage tank (52) configured to store the water-emulsion fuel drain discharged through the drain port (16) of the fuel injection pump apparatus (15);
a return line (54) through which the water-emulsion fuel drain stored in the water-emulsion fuel drain storage tank (52) is returned to the circulation line (17); and
a drain injection pump (55) connected to the return line (54).

2. The engine system (11) with the water-emulsion fuel drain recycling device (12) according to claim 1, wherein the return line (54) is configured such that the water-emulsion fuel drain is returned to the mixer (20) connected to the circulation line (17) or to an upstream side of the mixer (20).

3. The engine system (11) with the water-emulsion fuel drain recycling device (12) according to claim 1 or 2, wherein:
a desired fuel that is the water-emulsion fuel or a normal fuel which is not mixed with the water circulates in the circulation line (17); and
the fuel injection pump apparatus (15) is configured to supply to the engine main body (29) the water-emulsion fuel circulating in the circulation line (17) or the normal fuel which is not mixed with the water and circulates in the circulation line (17),
the engine system (11) further comprising.
a normal fuel drain storage tank (58) configured to store a normal fuel drain discharged through the drain port (16) of the fuel injection pump apparatus (15); and
a switching portion (59) configured to switch a destination to which the normal fuel drain or water-emulsion fuel drain discharged through the drain port (16) of the fuel injection pump apparatus (15) is transferred, to a corresponding storage tank that is the normal fuel drain storage tank (58) or the water-emulsion fuel drain storage tank (52).

4. The engine system (11) with the water-emulsion fuel drain recycling device (12) according to claim 1 or 2, further comprising a drain sensor (56) configured to detect the amount of water-emulsion fuel drain stored in the water-emulsion fuel drain storage tank (52) and drive the drain injection pump (55) when the amount of water-emulsion fuel drain reaches a predetermined level or larger.

5. The engine system (11) with the water-emulsion fuel drain recycling device (12) according to claim 1 or 2, wherein the engine main body (29) is a diesel engine main body.

## Patentansprüche

1. Motorensystem (11) mit Vorrichtung (12) zur Führung im Kreislauf eines Wasseremulsions-Brennstoff-Abflusses, umfassend:
eine Kreislaufleitung (17), in der ein Wasseremulsions-Brennstoff, der durch Mischen von Brennstofföl und Wasser mit Hilfe eines Mischers (20) gewonnen wurde, zirkuliert;
eine Brennstoffeinspritzpumpenvorrichtung (15), die mit der Kreislaufleitung (17) verbunden ist und umfasst: einen Brennstoffeinlass (32), durch den der Wasseremulsions-Brennstoff von der Kreislaufleitung (17) zugeführt wird, einen Brennstoffauslass (41), durch den der Wasseremulsions-Brennstoff in die Kreislaufleitung (17) zurückgeführt wird, eine Ausstoßöffnung (39), durch die der von dem Brennstoffeinlass (32) zugeführte Wasseremulsions-Brennstoff eingespritzt wird, und eine Abflussöffnung (16), durch die ein Wasseremulsions-Brennstoffabfluss, der als Schmieröl gedient hat, entladen wird;
einen Motorhauptkörper (29), in den der Wasseremulsions-Brennstoff durch die Ausstoßöffnung (39) der Brennstoffeinspritzpumpenvorrichtung (15) zugeführt wird;
einen Speichertank (52) für den Wasseremulsions-Brennstoffabfluss, der dazu konfiguriert ist, einen durch eine Abflussöffnung (16) der Brennstoffeinspritzpumpenvorrichtung (15) entladenen Wasseremulsions-Brennstoffabfluss zu speichern;
eine Rückführungsleitung (54), durch welche der in dem Speichertank (52) für den Wasseremulsions-Brennstoffabfluss gespeicherte Wasseremulsions-Brennstoffabfluss in die Kreislaufleitung (17) zurückgeführt wird; und
eine Abflusseinspritzpumpe (55), die mit der Rückführungsleitung (54) verbunden ist.

2. Motorensystem (11) mit der Vorrichtung (12) zur Führung im Kreislauf eines Wasseremulsions-Brennstoff-Abflusses gemäß Anspruch 1, wobei die Rückführungsleitung (54) derart konfiguriert ist, dass der Wasseremulsions-Brennstoffabfluss in den mit der Kreislaufleitung (17) verbundenen Mischer (20) oder an eine stromaufwärts liegende Seite des Mischers (20) zurückgeführt wird.

3. Motorensystem (11) mit der Vorrichtung (12) zur Führung im Kreislauf eines Wasseremulsions-Brennstoff-Abflusses gemäß Anspruch 1 oder 2, wobei:
ein gewünschter Brennstoff, bei dem es sich um den Wasseremulsions-Brennstoff oder einen normalen, nicht mit Wasser vermischten Brennstoff handelt, in der Kreislaufleitung (17) zirkuliert; und
die Brennstoffeinspritzpumpenvorrichtung (15) dazu konfiguriert ist, dem Motorhauptkörper (29) den in der Kreislaufleitung (17) zirkulierenden Wasseremulsions-Brennstoff oder den normalen, nicht mit Wasser vermischten Brennstoff, der in der Kreislaufleitung (17) zirkuliert, zuzuführen,
wobei das Motorensystem (11) weiterhin umfasst:
einen Speichertank (58) für den normalen Brennstoffabfluss, der dazu konfiguriert ist, einen durch die Abflussöffnung (16) der Brennstoffeinspritzpumpenvorrichtung (15) entladenen, normalen Brennstoffabfluss zu speichern; und
einen Schaltabschnitt (59), der dazu konfiguriert ist, einen Bestimmungsort, an den der normale Brennstoffabfluss oder der Wasseremulsions-Brennstoffabfluss, der durch die Abflussöffnung (16) der Brennstoffeinspritzpumpenvorrichtung (15) übertragen wird, in einen entsprechenden Speichertank, bei dem es sich um den Speichertank (58) für den normalen Brennstoffabfluss oder den Speichertank (52) für den Wasseremulsions-Brennstoffabfluss handelt, umzuschalten.

4. Motorensystem (11) mit der Vorrichtung (12) zur Führung im Kreislauf eines Wasseremulsions-Brennstoff-Abflusses gemäß Anspruch 1 oder 2, weiterhin umfassend: einen Abflusssensor (56), der dazu konfiguriert ist, die Menge an in dem Speichertank (52) für den Wasseremulsions-Brennstoffabfluss gespeicherten Wasseremulsions-Brennstoffabfluss zu erfassen und dazu, die Abflusseinspritzpumpe (55) anzutreiben, wenn die Menge an Wasseremulsions-Brennstoffabfluss ein vorbestimmtes oder höheres Niveau erreicht.

5. Motorensystem (11) mit der Vorrichtung (12) zur Führung im Kreislauf eines Wasseremulsions-Brennstoff-Abflusses gemäß Anspruch 1 oder 2, wobei es sich bei dem Motorhauptkörper (29) um einen Diesel-Motorhauptkörper handelt.

## Revendications

1. Système de moteur (11) doté d'un dispositif de recirculation d'effluent d'émulsion carburant-eau (12), comprenant :
une conduite de circulation (17) dans laquelle circule une émulsion carburant-eau obtenue par mélange de mazout et d'eau au moyen d'un mélangeur (20),
un dispositif de pompe d'injection de carburant (15) raccordé à la conduite de circulation (17) et comportant un orifice d'admission de carburant (32) permettant d'introduire l'émulsion carburant-eau provenant de la conduite de circulation (17), un orifice de refoulement de carburant (41) permettant de renvoyer l'émulsion carburant-eau vers la conduite de circulation (17), un orifice d'évacuation (39) permettant d'injecter l'émulsion carburant-eau provenant de l'orifice d'admission de carburant (32), et un orifice de purge (16) permettant d'évacuer un effluent d'émulsion carburant-eau ayant servi d'huile lubrifiante,
un corps principal de moteur (29) recevant l'émulsion carburant-eau par l'orifice d'évacuation (39) du dispositif de pompe d'injection de carburant (15),
un réservoir d'effluent d'émulsion carburant-eau (52) conçu pour contenir un effluent d'émulsion carburant-eau évacué par un orifice de purge (16) du dispositif de pompe d'injection de carburant (15),
une conduite de retour (54) permettant de renvoyer l'effluent d'émulsion carburant-eau, contenu dans le réservoir d'effluent d'émulsion carburant-eau (52), vers la conduite de circulation (17), et
une pompe d'injection d'effluent (55) raccordée à la conduite de retour (54).

2. Système de moteur (11) doté d'un dispositif de recirculation d'effluent d'émulsion carburant-eau (12) selon la revendication 1, dans lequel la conduite de retour (54) est conçue pour que l'effluent d'émulsion carburant-eau soit renvoyé vers le mélangeur (20) raccordé à la conduite de circulation (17) ou vers un côté amont du mélangeur (20).

3. Système de moteur (11) doté d'un dispositif de recirculation d'effluent d'émulsion carburant-eau (12) selon la revendication 1 ou 2, dans lequel :
un carburant souhaité, sous la forme de l'émulsion carburant-eau ou d'un carburant normal non mélangé à de l'eau, circule dans la conduite de circulation (17), et
le dispositif de pompe d'injection de carburant (15) est conçu pour fournir au corps principal de moteur (29) l'émulsion carburant-eau circulant dans la conduite de circulation (17) ou le carburant normal non mélangé à de l'eau et circulant dans la conduite de circulation (17) ;
le système de moteur (11) comprenant en outre :
un réservoir d'effluent de carburant normal (58) conçu pour contenir un effluent de carburant normal évacué par l'orifice de purge (16) du dispositif de pompe d'injection de carburant (15), et
une partie d'orientation (59) conçue pour orienter la destination de l'effluent de carburant normal ou de l'effluent d'émulsion carburant-eau évacué par l'orifice de purge (16) du dispositif de pompe d'injection de carburant (15) vers le réservoir qui lui correspond parmi le réservoir d'effluent de carburant normal (58) et le réservoir d'effluent d'émulsion carburant-eau (52).

4. Système de moteur (11) doté d'un dispositif de recirculation d'effluent d'émulsion carburant-eau (12) selon la revendication 1 ou 2, comprenant en outre un détecteur d'effluent (56) conçu pour détecter la quantité d'effluent d'émulsion carburant-eau contenu dans le réservoir d'effluent d'émulsion carburant-eau (52) et pour activer la pompe d'injection d'effluent (55) lorsque la quantité d'effluent d'émulsion carburant-eau atteint au moins un niveau prédéterminé.

5. Système de moteur (11) doté d'un dispositif de recirculation d'effluent d'émulsion carburant-eau (12) selon la revendication 1 ou 2, dans lequel le corps principal de moteur (29) est un corps principal de moteur diesel.
